# EUROPEAN PATENT SPECIFICATION

(11) **EP 2 903 129 B1**
(45) Date of publication and mention of the grant of the patent: **02.05.2018**
(21) Application number: 14306990.4
(22) Date of filing: 10.12.2014
(51) Int. Cl.: H02J 9/06

(54) **Multi-type and multi-mode automatic transfer switching apparatus and method thereof**
Multifunktionelle und multimodale automatische Übertragungsumschaltungsvorrichtung und Verfahren dafür
Appareil de commutation de transfert automatique multi-types et multimode et procédé associé

(30) Priority: 25.12.2013 CN 201310726243
(43) Date of publication of application: 05.08.2015
(73) Proprietor: Schneider Electric Industries SAS, 92500 Rueil-Malmaison (FR)
(72) Inventor: Wu, Wenjun, Shanghai 201203 (CN); Zhang, Yujun, Shanghai 201203 (CN); Zhang, Chenglai, Shanghai 201203 (CN)
(74) Representative: Manitz Finsterwald Patentanwälte PartmbB

(56) References cited:
- EP-A1- 2 448 087
- WO-A2-2012/061200
- CN-U- 202 995 418
- CN-Y- 201 360 178
- US-A1- 2004 262 997
- US-A1- 2005 278 075
- US-A1- 2007 018 506
- US-B1- 7 834 486
- Anonymous: "Easergy T200 I & E", Schneider Electric , 2010, page 36PP, XP002740171, Retrieved from the Internet: URL:http://www.schneider-electric.com/solu tions/ww/EN/med/41294878/application/pdf/1 728_pcred398085en.pdf [retrieved on 2015-05-27]
- Anonymous: "ATS021-ATS022 Automatic Transfer switching", ABB , July 2012 (2012-07), page 36PP, XP002740172, Retrieved from the Internet: URL:http://www09.abb.com/global/scot/scot2 09.nsf/veritydisplay/7bd38b33b95e3ca8c1257 a6b0050e5c2/$file/1SDC007408G0201.pdf [retrieved on 2015-05-27]

## Description

### TECHNICAL FIELD

The present disclosure generally relates to an Automatic Transfer Switching (ATS) apparatus and method thereof. More particularly, the present disclosure relates to an Automatic Transfer Switching (ATS) apparatus and method thereof, which are applicable to both of an ACO (Auto Change Over) type and a GEN (Generator) type and have three operation modes of an auto-return mode, a no-return mode and a self-return mode. The features of the preamble of the independent claims are known from "Easergy T200I&E", 2010, XP002740171, Retrieved from the Internet: URL: http://www.schneider-electric.com/ solutions/ww/EN/med/41294878/application/pdf/1728_pcred398085en.pdf.

### BACKGROUND

Generally, as an switching electrical device, the ATS performs a power supply management for sub-stations, transfers the sub-station from an power supplying source to another power supplying source (a back-up source) so as to ensure an continuity and an reliability of the power supplying of the sub-station and avoid a case where no power is supplied when the power supplying source fails. A power supplying source capable of supplying loads such as the sub-stations with the power via the ATS(s) for a long term stably is called as a Normal Primary line, while a power supplying source only supplying the loads with the power via the ATS(s) for a short term in emergency cases is called as a Back-up source.

Typically, according to properties of the power supplying source connected to the ATS, the ATS may be classified as two application types.

### (I) ACO (Auto Change Over) type

Generally, in the ATS with ACO type, one switch is connected with a path of commercial power or a transformer as a power supplying source 1, and the other switch is connected with another path of commercial power or another transformer as a power supplying source 2.

An transform action of the ATS with ACO type is to switch from the path of commercial power, which is connected with one switch and as the power supplying source 1, to the another path of commercial power, which is connected with the other switch and as the power supplying source 2, or in short, is to switch from the power supplying source 1 to the power supplying source 2.

The power supplying source 1 and power supplying source 2 configured for the ATS with ACO type may be the normal Primary line or the Back-up source alternatively.

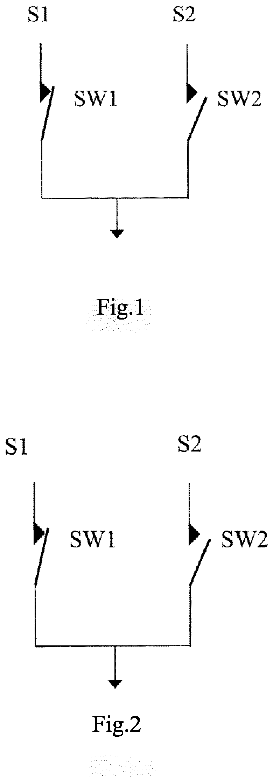

Fig.1 is an exemplary view illustrating a principle of the ATS with ACO (Auto Change Over) type. As illustrated in Fig.1, the power supplying source 1 and the power supplying source 2 may be replaced with each other, and both may supply power for a long term as the Normal Primary line.

### (II) GEN (Generator) type

Generally, in the ATS with GEN type, one switch is connected with a path of commercial power or a transformer as the power supplying source 1, while the other switch is connected with a generator as the power supplying source 2.

An transform action of the ATS with GEN type is to switch from the path of commercial power, which is connected with the one switch and as the power supplying source 1, to the generator, which is connected with the other switch and as the power supplying source 2, wherein the generator is needed to be started up before the transform action according to requirements.

In the GEN type, the commercial power connected with the power supplying source 1 is always the Normal Primary line while the generator connected with the power supplying source 2 is always the Back-up source. Fig.2 is an exemplary view illustrating a principle of the ATS with GEN (Generator) type). As illustrated in Fig.2, the power supplying source 1 is a power supplying source capable of supplying power for a long term, and the power supplying source 2 is a Back-up power source for supplying power for a short term in emergency cases.

The switch S1 is illustrated as being connected with the commercial power and the switch S2 is illustrated as being connected with the generator in Fig.2. Of course, in an actual configuration, positions at which the commercial power and the generator are connected may be changed, that is, a case where the switch S1 is connected with the generator and the switch S2 is connected with the commercial power is also possible.

Generally, there are three main classes of operation modes, M1, M2 and M3, in the ATS, as described below.

### (M1) Auto-Return Mode

When no priorities are predefined for the two power supplying sources to which the ATS is connected, the people would not desire to manipulate the ATS again after the ATS is actived to operate. In fact, the people desire the switch in the ATS to be connected to the power supplying source which is supplying power automatically, and desire no manipulations for the ATS even if a previous power supplying source which is failed returns to normal. Therefore, the Auto-Return Mode is proposed for this case.

In the Auto-Return Mode, no definitions are required to be predefined regarding which power supplying source to which the switch in the ATS is connected is the Normal Primary line and which power supplying source to which the switch in the ATS is connected is the Back-up source. For the ATS, the Auto-Return Mode means that the Normal Primary line is an actived power supplying source which is supplying power to the load (for example, the sub-stations).

In the Auto-Return Mode, once the power supplying source which is supplying power fails, the ATS switches to another power supplying source which can supply power to the load continually. The another power supplying source would be switched back to the previous power supplying source only if the another power supplying source fails and the previous power supplying source has recovered from the fault.

In the Auto-Return Mode, an automatism switching of S1=> S2 or S2=>S1 would occur if above corresponding conversion conditions are satisfied.

The ATS with ACO type operates in the Auto-Return Mode generally.

### (M2) No-Return Mode

In the No-Return Mode, it is required to predefine which power supplying source to which the switch in the ATS is connected is the Normal Primary line and which power supplying source to which the switch in the ATS is connected is the Back-up source.

In the No-Return Mode, the ATS would switch to the Back-up source once the Normal Primary line fails.

That is to say, if the S1 in the ATS is connected to the Normal Primary line and the S2 is connected to the Back-up source, the ATS would switch to the S2 when the S1 fails, S1=>S2 (a first No-Return Mode). If the S2 is connected to the Normal Primary line and the S1 is connected to the Back-up source, the ATS would switch to the S1 when the S2 fails, S1 <=S2 (a second No-Return Mode).

In the No-Return Mode, the switching from the Normal Primary line to the Back-up source occurs if the Normal Primary line fails, but a reverse switching form the Back-up source to the Normal Primary line would not occur.

For the ATS with ACO type (ATS-ACO) operating in the No-Return Mode, the ATS would switch to and lock to the Back-up source once the Normal Primary line fails. Only a manual operation is allowed to enable the ATS to return the Normal Primary line. That is, only the switching of S1<=S2 is allowed if the power supplying source connected at the S1 is the Back-up source; and the manual operation is required to perform the switching of S1=>S2. Similarly, only the switching of S1=>S2 is allowed if the power supplying source connected at the S2 is the Back-up source; and the manual operation is required to perform the switching of S2=>S1.

For the ATS with GEN type (ATS-GEN) operating in the No-Return Mode, the ATS also switches to and lock to the Back-up source once the Normal Primary line fails. Only the manual operation is allowed to enable the ATS to return the Normal Primary line. A difference is in that the Back-up source herein is the generator. That is, only the switching of S1<=S2 is allowed if the generator is connected at the S1; and the manual operation is required to perform the switching of S1=>S2. Similarly, only the switching of S1=>S2 is allowed if the generator is connected at the S2; and the manual operation is required to perform the switching of S2=>S1.

### (M3) Self-Return Mode

In the Self-Return Mode, it is also required to predefine which power supplying source is the Normal Primary line and which power supplying source is the Back-up source.

In the Self-Return Mode, the ATS would switch to the Back-up source once the Normal Primary line fails, and would switch back to the Normal Primary line as soon as the Normal Primary line recovers regardless of the state of the Back-up source.

That is to say, if the S1 in the ATS is connected to the Normal Primary line and the S2 is connected to the Back-up source, the ATS switches to the S2 when the S1 fails and returns to the S1 as soon as the fault in the S1 is removed, and this process is expressed as S1 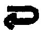 S2 (a first Self-Return Mode). On the other hand, if the S2 in the ATS is connected to the Normal Primary line and the S1 is connected to the Back-up source, the ATS switches to the S1 when the S2 fails and returns to the S2 as soon as the fault in the S2 is removed, and this process is expressed as S1 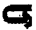 S2 (a second Self-Return Mode).

For the ATS with ACO type (ATS-ACO) operating in the Self-Return Mode, the ATS would switch to the Back-up source once the Normal Primary line fails and return to the Normal Primary line as soon as the fault of the Normal Primary line is removed. That is to say, only the switching of S1 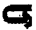 S2 is allowed if the power supplying source connected at the S1 is the Back-up source; while only the switching of S2 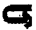 S1 is allowed if the power supplying source connected at the S2 is the Back-up source.

For the ATS with GEN type (ATS-GEN) operating in the Self-Return Mode, similarly, the ATS would switch to the Back-up source once the Normal Primary line fails and return to the Normal Primary line as soon as the fault of the Normal Primary line is removed. Only difference is in that the Back-up source herein is the generator. That is to say, only the switching of S1 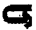 S2 is allowed if the generator is connected at the S1; while only the switching of S2 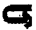 S1 is allowed if the generator is connected at the S2.

With respect to the two types and three main modes for the ATS, the ATS may have many possible operation statuses. In order to cope with such various operation statuses, some ATS products take measures as follows.

1. A flexibility of the ATS is decreased by providing only two automatism actions and fixing the Normal Primary line.

2. All operation statuses are enumerated, a control sequence is selected and an ATS operation table is given.

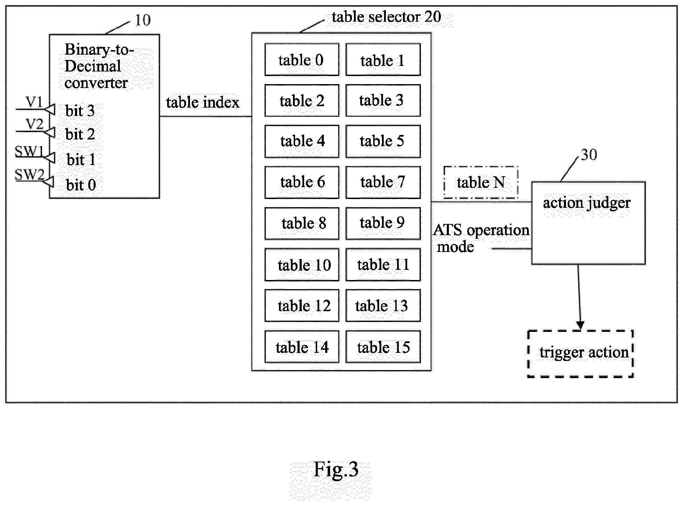

As an example, Fig.3 illustrates a control process in which all operation statuses of the ATS are enumerated in the prior art.

For each operate state of the ATS, an action matrix table like the following Table 1 is made, wherein the Table 1 shows an example of an action look-up table for the ATS. In fact, a number of such operation tables may be up to 16 depending on combinations of the two paths of the power supplying sources and the statuses of the two switches in the ATS. Therefore, the people have to make 16 look-up tables like the Table 1.

**Table 1 An Example of Action Look-Up Table for ATS**

| Table No. | Operation Mode | Action Name |
|---|---|---|
| X | S1=>S2 | Go_to_S2 |
| | S1<= S2 | No action |
| | S1<=>S2 | Go_to_S2 |
| | S1 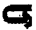 S2 | Go_to_S2 |
| | S1 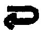 S2 | Go_to_S1 |

In the Table 1, "Go_to_S1" denotes actions as follows: "opening the switch S2 connected with the power supplying source 2, and closing the switch S1 connected with the power supplying source 1", wherein, the generator is started, then the switch S2 connected with the power supplying source 2 is opened and the switch S1 connected with the generator is closed, if the S1 is connected with the generator; and the switch S2 connected with the generator is opened, the switch S1 connected with the power supplying source 1 is closed and the generator is stopped, if the S2 is connected with the generator.

Similarly, "Go_to_S2" denotes actions as follows: "opening the switch S1 connected with the power supplying source 2, and closing the switch S2 connected with the power supplying source 2", wherein, the generator is started, then the switch S1 connected with the power supplying source 1 is opened and the switch S2 connected with the generator is closed, if the S2 is connected with the generator; and the switch S1 connected with the generator is opened, the switch S2 connected with the power supplying source 2 is closed and the generator is stopped, if the S1 is connected with the generator.

In the look-up table shown in Table 1, there are 5 different operation modes based on connection positions between the Normal Primary line and the Back-up source, and such 5 operation modes are obtained by considering the transferring directions in the three main operation classes, M1, M2, M3, of the ATS. Table 2 shows detailed descriptions for the above 5 different operation modes.

**Table 2 ATS Operation Modes**

| Operation Mode | Description |
|---|---|
| S1=>S2 | "No-Return", the power supplying source 1 is the Normal Primary line and the power supplying source 2 is the Back-up source. |
| S1<= S2 | "No-Return", the power supplying source 2 is the Normal Primary line, and the power supplying source 1 is the Back-up source. |
| S1<=>S2 | "Auto-Return", no difference exists between the power supplying sources 1, 2, which are equal, and it is not necessary to distinguish the Normal Primary line from the Back-up source. |
| S1 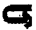 S2 | "Self-Return", the power supplying source 1 is the Normal Primary line and the power supplying source 2 is the Back-up source. |
| S1 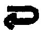 S2 | "Self-Return", the power supplying source 2 is the Normal Primary line and the power supplying source 1 is the Back-up source. |

Therefore, there may be up to 16×5=80 action cases of the ATS with respect to the 16 combinations between the two lines of the power supplying sources and the two statuses of the respective switches of the ATS, based on the 5 different operation modes derived from the connection positions between the Normal Primary line and the Back-up source.

Fig.3 is an exemplary view illustrating a judgment of the ATS actions according to the above exmple Table 1 and Table 2 in the art. Referring to Fig.3, a Binary-to-Decimal converter 10 converters an inputted binary number with 4 bits into a decimal number representing a look-up table number. Wherein the 4 bits inputted into the Binary-to-Decimal converter 10 are, respectively: a V1 representing whether the voltage of the power supplying source 1 of the ATS is active (V1=1, active; V1=0, inactive); a V2 representing whether the voltage of the power supplying source 2 of the ATS is active (V2=1, active; V2=0, inactive); a SW1 representing whether the switch SW1 of the ATS, connected with the power supplying source 1, is closed (SW1=1, closed; SW1=0, opened); and a SW2 representing whether the switch SW2 of the ATS, connected with the power supplying source 2, is closed (SW2=1, closed; SW2=0, opened). A table selector 20 selects a corresponding look-up table according to an output of the Binary-to-Decimal converter 10. An action judger 30 judges and triggers actions the ATS should perform according to the look-up table selected by the table selector 20 and the inputted operation mode. The process for the above action selecting is very complicated.

How to make the ATS to have a flexible configuration is always a headache since the ATS may have up to 80 possible operations statuses. For example, if the ATS with ACO type is used, the voltages of the first path of commercial power and the second path of commercial power which are connected may be turned on or off, and the switch S1 used for the first path of commercial power and the switch S2 used for the second path of commercial power included in the ATS with ACO type may be closed or opened.

In order to support a lock-releasing in the Self-Return mode, solutions in the art have to send workers to the field so as to operate manually.

Further, certain ATS products support the No-Return mode by removing the priorities of the power supplying sources. But after doing that, it is more complicated when such ATS products removing the priorities of the power supplying sources are used in an operation condition wherein the Auto-Return mode should be supported simultaneously.

The existing ATS products limit the usage flexibility to avoid facing too many operation conditions. And even doing that, a control logic for the ATS is still very complicated, easy to make mistake and its cost is very high.

Users desire to reduce human interventions in the using of the ATS while the ATS can be provided with the Auto-Return mode as far as possible.

The present disclosure is proposed therefrom. The present disclosure tries to provide an ATS supporting more automatism actions and having more flexible configuration.

### SUMMARY

According to an aspect of the present disclosure, there is provided a multi-type and multi-mode Automatic Transfer Switching (ATS) apparatus, as defined in the independent apparatus claim, comprising a first switch and a second switch which are connected with a first power supplying source and a second power supplying source, respectively and supplying power to a load via the first switch and the second switch, the ATS apparatus receives one of a first to a fifth indication signals for operation modes of the ATS, the first to the fifth indication signals are used to indicate a first to a fifth operation modes, respectively, wherein the first operation mode is a "No-Return" mode in which the first power supplying source is a Normal Primary line and the second power supplying source is a Back-up source; the second operation mode is a "Self-Return" mode in which the first power supplying source is the Normal Primary line and the second power supplying source is the Back-up source; the third operation mode is a "Auto-Return" mode; the fourth operation mode is a "No-Return" mode in which the second power supplying source is the Normal Primary line and the first power supplying source is the Back-up source; and the fifth operation mode is the "Self-Return" mode in which the second power supplying source is the Normal Primary line and the first power supplying source is the Back-up source, the ATS apparatus further comprises: a role judging device, a trigger action acquiring device and a trigger action performing device. Wherein the role judging device judges which power supplying source of the first power supplying source and the second power supplying source in the ATS is the Normal Primary line and which power supplying source is the Back-up source according to the received one among the first to fifth indication signals, and further determines whether a connection of the ATS is a first corresponding relationship or a second corresponding relationship according to the determination for the Normal Primary line and the Back-up source, wherein in the first corresponding relationship, the first power supplying source is the Normal Primary line, the second power supplying source is the Back-up source, a voltage of the Normal Primary line is equal to a voltage of the first power supplying source, a voltage of the Back-up source is equal to a voltage of the second power supplying source, a Normal Primary line switch connected with the Normal Primary line is the first switch and a Back-up switch connected with the Back-up source is the second switch; in the second corresponding relationship, the second power supplying source is the Normal Primary line, the first power supplying source is the Back-up source, the voltage of the Normal Primary line is equal to the voltage of the second power supplying source, the voltage of the Back-up source is equal to the voltage of the first power supplying source, the Normal Primary line switch connected with the Normal Primary line is the second switch and the Back-up switch connected with the Back-up source is the first switch; wherein the role judging device judges which power supplying source of the first power supplying source and the second power supplying source in the ATS is the Normal Primary line and which power supplying source is the Back-up source by a role judger included therein according to the received third indication signal, when the third indication signal is received. Wherein the trigger action acquiring device is configured to determine whether a trigger action of the ATS apparatus is a trigger action for transferring to the Normal Primary line or a trigger action for transferring to the Back-up source using a voltage variable of the Normal Primary line representing a voltage status of the Normal Primary line, a voltage variable of the Back-up source representing a voltage status of the Back-up source, a switch variable of the Normal Primary line representing a switch status connected with the Normal Primary line and a switch variable of the Back-up source representing a switch status connected with the Back-up source, from the views of the Normal Primary line and the Back-up source; wherein in the first corresponding relationship of the role judging device, the trigger action for transferring to the Normal Primary line is a trigger action for transferring to the first power supplying source and the trigger action for transferring to the Back-up source is a trigger action for transferring to the second power supplying source; and in the second corresponding relationship of the role judging device, the trigger action for transferring to the Normal Primary line is the trigger action for transferring to the second power supplying source and the trigger action for transferring to the Back-up source is the trigger action for transferring to the first power supplying source. Wherein the trigger action performing device is configured to perform the corresponding trigger action according to the corresponding relationship determined by the role judging device and the trigger action determined by the trigger action acquiring device.

In an example, a generator is connected with the first power supplying source or connected with the second power supplying source.

In an example, the role judging device is implemented with a hardware logic or a software logic.

The role judging device comprises a three-input AND logic and a four-input AND logic. Wherein the third indication signal, the voltage signal of the first power supplying source and a signal of the first switch are inputted into a three-input AND gate, while the third indication signal, the voltage of the second power supplying source, a signal of the second switch and an inverted output signal from the first AND gate are inputted into a four-input AND gate.

In an example, the trigger action acquiring device is implemented with a hardware logic or a software logic.

In an example, the trigger action acquiring device comprises a first AND gate, a second AND gate, a third AND gate, a fourth AND gate, a first OR gate, a NOT gate, a second OR gate and a third OR gate; wherein when the voltage of the Back-up source is inactive, the voltage variable of the Back-up source, whose value is 0 originally, becomes 1 through the NOT gate, outputs a digital signal of 1 after passing through the second OR gate, and in turn triggers the trigger action for transferring to the Normal Primary line; when the voltage of the Back-up source is active but the voltage of the Normal Primary line is inactive, the voltage variable of the Back-up source whose value is 1 and an inverted signal of the voltage variable of the Normal Primary line whose value is 0 are input to the second AND gate, the output of the second AND gate become 1; after the output of the second AND gate passing through the third OR gate, a digital signal of 1 is output and in turn trigger the trigger action for transferring to the Back-up source; when the voltage of the Back-up source is active and the voltage of the Normal Primary line is also active, the voltage variable of the Back-up source whose value is 1 and the voltage variable of the Normal Primary line whose value is 1 are input to the first AND gate, the first AND gate outputs a signal whose value is 1 to the third AND gate and the fourth AND gate, which delivers an information indicating that the voltages of both the Back-up source and the Normal Primary line are active; wherein if after the switch variable of the Normal Primary line and an inverted signal of the switch variable of the Back-up source passing through the first OR gate, a signal whose value is 1 is obtained, it is represented that the switch connected with the Back-up source is closed, and at this time, the third AND gate outputs a digital signal of 1, and after the output signal of 1 from the third AND gate passing through the second OR gate, a digital signal of 1 is output and in turn triggers the trigger action for transferring to the Normal Primary line; if after an inverted signal of the switch variable of the Normal Primary line and the switch variable of the Back-up source passing through the fourth AND gate, a signal whose value is 1 is obtained, it is represented that the switch connected with the Normal Primary line is closed, and at this time, the fourth AND gate outputs a digital signal of 1, and after the output signal of 1 from the fourth AND gate passing through the third OR gate, a digital signal of 1 is output and in turn triggers the trigger action for transferring to the Back-up source.

In an example, the ATS is locked after the trigger action is performed if the ATS is in the first operation mode or the fourth operation mode.

In an example, if a configuration of the ATS allows a parallel coupling, and the voltages of the first power supplying source, the second power supplying source are normal while a phase synchronization checking for the first power supplying source and the second power supplying source is OK, the first switch and the second switch are turned on simultaneously so as to supply power to the load before the transferring between the switches of the ATS, and then the transferring between the switches of the ATS is performed.

According to another aspect of the present disclosure, there is provided a method for the above multi-type and multi-mode Automatic Transfer Switching (ATS) apparatus, comprises steps of: identifying, by a role judging device, roles of a first power supplying source and a second power supplying source, namely, judging which power supplying source of the ATS is a Normal Primary line and which power supplying source is a Back-up source; acquiring, by a trigger action acquiring device, a trigger action so as to determine an action to be triggered; and performing, by a trigger action performing device, a corresponding trigger action according to a corresponding relationship determined by the role judging device and the trigger action determined by the trigger action acquiring device.

In an example, a generator is connected with the first power supplying source or connected with a second power supplying source.

In an example, the ATS is locked after the trigger action is performed if the ATS is in a first operation mode or a fourth operation mode.

In an example, if a configuration of the ATS allows a voltage paralleling, and the voltages of the first power supplying source, the second power supplying source are normal while a phase synchronization checking for the first power supplying source and the second power supplying source is OK, the first switch and the second switch are turned on simultaneously so as to supply power to the load before the transferring between the switches of the ATS, and then the transferring between the switches of the ATS is performed.

The ATS according to the present disclosure takes abnormal switch actions and abnormal voltage status into consideration, the configuration of the ATS according to the present disclosure is more flexible, which can support the above three main modes (5 specified operation modes) of the ATS, and the Normal Primary line supplying power can be any one of the two power supplying sources; an enumeration of the working conditions is simpler, and its operation is safer and more reliable. The ATS according to the present disclosure allows the parallel coupling, that is, the ATS according to the present disclosure can allow both of the two power supplying sources to supply power simultaneously in a short time, in order to avoid a short power interruption caused by a delay from a mechanical action of the switches during the transferring process of the ATS.

### BRIEF DESCRIPTION OF THE DRAWINGS

The present disclosure will become more fully understood and apparent for those skilled in the art from the detailed description given hereinafter and the accompanying drawings which are given by way of illustration only, and thus are not limitative of the present disclosure and wherein:
Fig.1 is an exemplary view illustrating a principle of a ATS with ACO (Auto Change Over) type;
Fig.2 is an exemplary view illustrating a principle of a ATS with GEN (Generator) type;
Fig.3 is an exemplary view illustrating a judgment of ATS actions according to an action look-up table in the art;
Fig.4 is an exemplary view illustrating a principle for judging whether a power supplying source of the ATS is a Normal Primary line or a Back-up source according to the present disclosure;
Fig.5 is an exemplary view illustrating a principle of logic operations for judging a trigger action of the ATS according to the present disclosure;
Fig.6 illustrates performing processes of the two actions of Go_To_S1 and Go_To_S2 of the ATS according to the present disclosure;
Fig.7 illustrates an overall operation flow of the ATS according to the present disclosure;
Fig.8 illustrates a switch action process of an Auto-Return mode S1 <=>S2 of the ATS according to the present disclosure;
Fig.9 illustrates a switch action process of a Self-Return mode S1 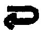 S2 of the ATS according to the present disclosure, in which a parallel coupling is not allowed;
Fig.10 illustrates a switch action process of a Self-Return mode S1 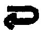 S2 of the ATS according to the present disclosure, in which a parallel coupling is allowed; and
Fig.11 illustrates a switch action process of a No-Return mode S1=>S2 of the ATS according to the present disclosure.

### DETAILED DESCRIPTION

The ATS according to the present disclosure is applicable to two application types of ACO (Auto Change Over) and GEN (Generator).

The present disclosure researches common characters of the ATS in its operation statuses and principles of trigger actions for the different working conditions, simplifies the operation statuses, and gives a general method for judging the action to be triggered in the ATS by recognizing features of power supplying sources connected with switches.

The present disclosure can provide an Automatic Transfer Switching (ATS) apparatus for managing powers of a load supporting two power supplying sources. The two power supplying sources may be two transformers or one transformers and one generator, which supply power to sub-stations.

The principle of the present disclosure would be described in details in connection with the accompanying drawings thereafter.

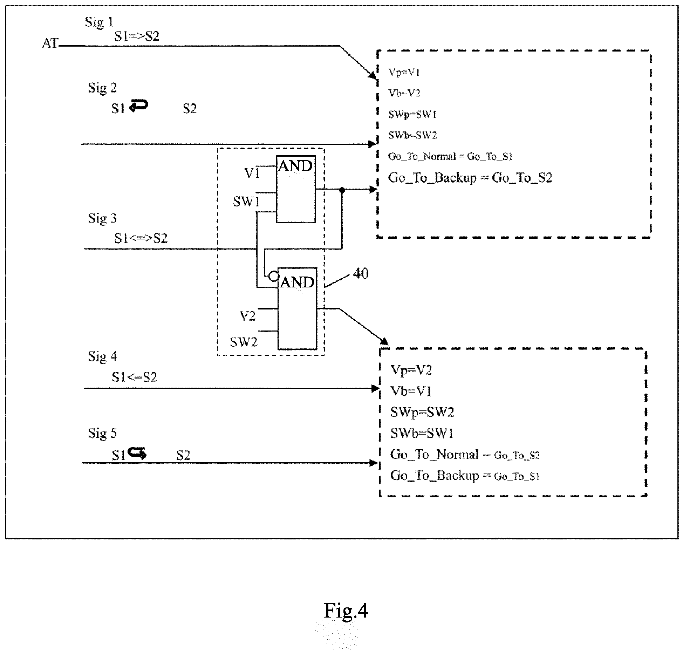

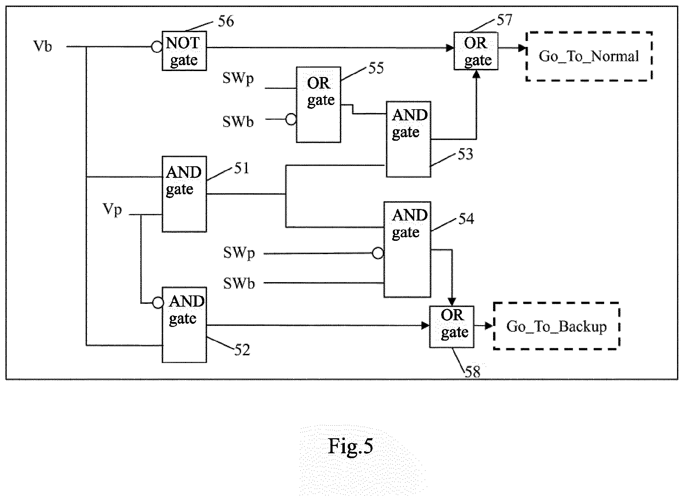

A conception of the present disclosure is to design a simple method generating a trigger decision as the working condition is changed. The enumeration for the working conditions in the form of the look-up table, the matrix and the corresponding actions illustrated in Fig.3 are not used directly. In the present disclosure, any one of the power supplying sources for the ATS may be the Normal Primary line or the Back-up source, and identifying or predetermining whether the power supplying source is the Normal Primary line or the Back-up source is based on Fig.4, and judging of the trigger action is based on Fig.5.

At first, variables in the present disclosure are defined in Table 3 as follows

**Table 3 Variables of ATS in Present Disclosure**

| Variable Name | Description |
|---|---|
| AT | Operation Mode (5 modes, corresponding to Table 2) |
| Vp | Voltage of Normal Primary line. It is TRUE (1) when the voltage of the Normal Primary line is OK, else FALSE (0). |
| Vb | Voltage of Back-up source. It is TRUE (1) when the voltage of the Back-up source is OK, else FALSE (0). |
| SWp | Switch connected with Normal Primary line. It is TRUE (1) when the switch connected with the Normal Primary line is closed, else FALSE (0). |
| SWb | Switch of connected with Back-up source. It is TRUE (1) when the switch connected with the Back-up source is closed, else FALSE (0). |
| V1 | Voltage of Power Supplying Source 1. It is TRUE (1) when the voltage of the power supplying source 1 is OK, else FALSE (0). |
| V2 | Voltage of Power Supplying Source 2. It is TRUE (1) when the voltage of the power supplying source 2 is OK, else FALSE (0). |
| SW1 | Switch connected with Power Supplying Source 1. It is TRUE (1) when the switch connected with the power supplying source 1 is closed, else FALSE (0). |
| SW2 | Switch connected with Power Supplying Source 2. It is TRUE (1) when the switch connected with the power supplying source 2 is closed, else FALSE (0). |
| //Enable | Parallel Coupling Enabled. It is TRUE (1) when following conditions are true: |
| | 1. the configuration of the ATS allows the parallel coupling; |
| | 2. the Synchro-check is OK; and |
| | 3. both voltages of the power supplying sources 1 and 2 are OK. |

In the Table 3, Vp, Vb, SWp and SWb are the variables defined from the views of the Normal Primary line and the Back-up source, while the V1, V2, SW1 and SW2 are the variables defined from the view of physical implementation. Therefore, the Normal Primary line may be the power supplying source 1, or also may be the power supplying source 2. Correspondingly, the Vp may be equal to the V1, or also may be equal to the V2; the Vb may be equal to the V1, or also may be equal to the V2; the SWp may be the SW1, or also may be the SW2; and the SWb may be the SW1, or also may be the SW2.

Nevertheless, the Vp is equal to the V1, the Vb is equal to the V2, the SWp is the SW1 and the SWb is the SW2, when the power supplying source 1 is determined to be the Normal Primary line. The Vp is equal to the V2, the Vb is equal to the V1, the SWp is the SW2 and the SWb is the SW1, when the power supplying source 2 is determined to be the Normal Primary line.

Generally, among the 5 operation modes of the ATS, S1=>S2, S1<=S2, S1<=>S2, S1 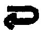 S2 and S1 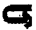 S2, it is not necessary to distinguish the Normal Primary line from the Back-up source only in S1<=>S2. And, the trigger actions of the four operation modes of S1=>S2, S1<=S2, S1 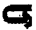 S2 and S1 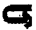 S2 are either transferring from S1 to S2 or transferring from S2 to S1, that is to say, the trigger actions of the four operation modes of S1=>S2, S1<=S2, S1 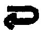 S2 and S1 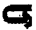 S2 are included in two types of actions: the transferring from S1 to S2, and the transferring from S2 to S1.

However, if it is considered that the Normal Primary line and the Back-up source are distinguished artificially in the S1<=>S2 mode, the trigger actions for the S1<=>S2 also only comprise the two types of actions as above: the transferring from S1 to S2 and the transferring from S2 to S1.

Therefore, regarding the S1<=>S2 mode for the variable AT of the ATS according to the present disclosure, followings are specified in the present disclosure: if the ATS is in the S1<=>S2 mode, while the voltage of the power supplying source 1 of the ATS is normal, the switch SW1 connected with the power supplying source 1 is closed and the switch SW2 connected with the power supplying source 2 is opened, it would be considered that the power supplying source 1 is the Normal Primary line, the power supplying source 2 is the Back-up source, the Vp is equal to the V1, the Vb is equal to the V2, SWp is the SW1 and the SWb is the SW2, no matter whether the voltage of the power supplying source 2 of the ATS is normal or not.

On the other hand, if the ATS is in the S1<=>S2 mode, while the switch SW1 connected with the power supplying source 1 is opened, the voltage of the power supplying source 2 of the ATS is normal, and the switch SW2 connected with the power supplying source 2 is closed, it would be considered that the power supplying source 2 is the Normal Primary line, the power supplying source 1 is the Back-up source, the Vp is equal to the V2, the Vb is equal to the V1, SWp is the SW2 and the SWb is the SW1, no matter whether the voltage of the power supplying source 1 of the ATS is normal or not.

Upon the specification for the S1<=>S2 mode, the trigger actions of the ATS according to the present disclosure only comprise two types: the transferring from S1 to S2 and the transferring from S2 to S1.

Fig.4 is an exemplary view illustrating a principle for judging whether the power supplying source of the ATS is the Normal Primary line or the Back-up source according to the present disclosure.

Referring to Fig.4, the ATS receives one of indication signals Sig1, Sig2, Sig3, Sig4 and Sig5 indicating the operation modes of the ATS, and values of 1 for the indication signals Sig1, Sig2, Sig3, Sig4 and Sig5 are used for indicating the operation modes of S1=>S2, S1 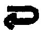 S2, S1<=>S2, S1<=S2, and S1 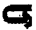 S2, respectively. The indication signals Sig1, Sig2, Sig3, Sig4 and Sig5 may be acquired in a manner of hardware or software.

If the received indication signal is one of the Sig1, Sig2, following judgment results may be obtained: it is considered that the power supplying source 1 is the Normal Primary line, the power supplying source 2 is the Back-up source, Vp is equal to V1, Vb is equal to V2, SWp is the SW1 and SWb is the SW2.

If the received indication signal is one of the Sig4, Sig5, following judgment results may be obtained: it is considered that the power supplying source 2 is the Normal Primary line, the power supplying source 1 is the Back-up source, Vp is equal to V2, Vb is equal to V1, SWp is the SW2 and SWb is the SW1.

If the received indication signal is the Sig3, the signal Sig3 whose value is 1 is inputted into a role judger 40 together with the signals of V1, SW1, V2, SW2, and following judgment results may be obtained by the role judger 40: it is considered that the power supplying source 1 is the Normal Primary line, the power supplying source 2 is the Back-up source, Vp is equal to V1, Vb is equal to V2, SWp is the SW1 and SWb is the SW2. Or following judgment results may be obtained: it is considered that the power supplying source 2 is the Normal Primary line, the power supplying source 1 is the Back-up source, Vp is equal to V2, Vb is equal to V1, SWp is the SW2 and SWb is the SW1.

The role judger 40 may be implemented with a three-input logic and a four-input logic, wherein the signal Sig3 along with the signals of V1, SW1 are inputted into the three-input AND gate 41, and the signal Sig3 along with the signals of V2, SW2 and an inverted output signal from the first AND gate 41 are inputted into the four-input AND gate 42.

Thus, the role judger 40 judges that the power supplying source 1 is the Normal Primary line, the power supplying source 2 is the Back-up source, the Vp is equal to the V1, the Vb is equal to the V2, the SWp is the SW1 and the SWb is the SW2, when the voltage of the power supplying source 1 of the ATS is normal, the switch SW1 connected with the power supplying source 1 is closed and the switch SW2 connected with the power supplying source 2 is opened (no matter whether the voltage of the power supplying source 2 of the ATS is normal or not).

And, the role judger 40 judges that the power supplying source 2 is the Normal Primary line, the power supplying source 1 is the Back-up source, the Vp is equal to the V2, the Vb is equal to the V1, the SWp is the SW2 and the SWb is the SW1, when the switch SW1 connected with the power supplying source 1 is opened (no matter whether the voltage of the power supplying source 1 of the ATS is normal or not), the voltage of the power supplying source 2 of the ATS is normal and the switch SW2 connected with the power supplying source 2 is closed.

The process for judging whether the power supplying sources of the ATS is the Normal Primary line or the Back-up source in Fig.4 may be implemented either by a hardware circuit or a software logic.

After judging by the role judger 40 shown in Fig.4, the trigger actions of the ATS according to the present disclosure only comprise two types, as shown in following Table 4.

**Table 4 Trigger Actions of ATS of Present Disclosure**

| Actions | Description |
|---|---|
| Go_To_S1 | Transferring to the power supplying source 1. |
| | If the power supplying source 1 is the generator, the generator is started before the transferring. |
| | Locking the transferring of the ATS if the mode of the ATS is |
| | No-Return "S1<=S2". |
| Go_To_S2 | Transferring to the power supplying source 2. |
| | If the power supplying source 2 is the generator, the generator is started before the transferring. |
| | Locking the transferring of the ATS if the mode of the ATS is No-Return "S1=>S2". |

When the ATS is locked in the No-Return mode, the ATS can not be controlled automatically, and only manual transferring for the ATS is allowed. Therefore, when the ATS is locked, people are asked to turn off the automatism control for the ATS and control the switches of the ATS.

Fig.5 is an exemplary view illustrating a principle of logic operations for judging the trigger action of the ATS according to the present disclosure. Fig.5 shows an acquiring of the trigger actions. Fig.5 explains a detailed logic implementation for acquiring the trigger actions with the variables of Vp, Vb, SWp and SWb (or the digital logic signals Vp, Vb, SWp and SWb) from the views of the Normal Primary line and the Back-up source.

The trigger action acquiring device of Fig.5 comprises a first AND gate 51, a second AND gate 52, a third AND gate 53, a fourth AND gate 54, a first OR gate 55, a NOT gate 56, a second OR gate 57 and a third OR gate 58.

When the voltage of the Back-up source is inactive (for example, fails or is undervoltage), the Vb signal, whose value is 0 originally, becomes 1 through the NOT gate 56, outputs a digital signal of 1 after passing through the second OR gate 57, and in turn triggers the Go_To_Normal action.

When the voltage of the Back-up source is active but the voltage of the Normal Primary line is inactive, the Vb signal whose value is 1 and an inverted signal of the Vp signal, whose value is 0, are input to the second AND gate 52, the output of the second AND gate 52 becomes 1. After the output of the second AND gate 52 passing through the third OR gate 58, a digital signal of 1 is output and in turn trigger the Go_To_Backup action.

When the voltage of the Back-up source is active and the voltage of the Normal Primary line is also active, the Vb signal whose value is 1 and the Vp signal whose value is 1 are input to the first AND gate 51, the first AND gate 51 outputs a signal whose value is 1 to the third AND gate 53 and the fourth AND gate 54, which delivers an information indicating that the voltages of both the Back-up source and the Normal Primary line are active. If after the SWp signal and an inverted signal of the SWb signal passing through the first OR gate 55, a signal whose value is 1 is obtained, it is represented that the switch connected with the Back-up source is closed, and at this time, the third AND gate 53 outputs a digital signal of 1, and after the output signal of 1 from the third AND gate 53 passing through the second OR gate 57, a digital signal of 1 is output and in turn triggers the Go_To_Normal action. If after an inverted signal of the SWp signal and the SWb signal passing through the fourth AND gate 54, a signal whose value is 1 is obtained, it is represented that the switch connected with the Normal Primary line is closed, and at this time, the fourth AND gate 54 outputs a digital signal of 1, and after the output signal of 1 from the fourth AND gate 54 passing through the third OR gate 58, a digital signal of 1 is output and in turn triggers the Go_To_Backup action.

The logic operations for judging the trigger action shown in Fig.5 are only exemplary, and those skilled in that can further find other logic operation schemes for implementing such judging functions. The logic operations for judging the trigger action shown in Fig.5 may be implemented with a hardware circuit or a software logic.

By referring to Figs.4 and 5 together, following mapping relationships may be acquired.

Regarding a case in which the power supplying source 1 is the Normal Primary line, the power supplying source 2 is the Back-up source, the Vp is equal to the VI, the Vb is equal to the V2, the SWp is the SW1 and the SWb is the SW2, shown in Fig.4: the trigger action Go_To_Normal of Fig.5 corresponds to the trigger action Go_To_S1 of Fig.4; and the trigger action Go_To_Backup of Fig.5 corresponds to the trigger action Go_To_S2 of Fig.4, as shown in following Table 5.

**Table 5 Mapping Relationship between ATS Trigger Actions in Figs.4 and 5**

| Fig.5 | Fig.4 |
|---|---|
| Go To_Normal | Go_To_S1 |
| Go_To_Backup | Go_To_S2 |

Regarding a case in which the power supplying source 2 is the Normal Primary line, the power supplying source 1 is the Back-up source, the Vp is equal to the V2, the Vb is equal to the V1, the SWp is the SW2 and the SWb is the SW1, shown in Fig.4: the trigger action Go_To_Normal of Fig.5 corresponds to the trigger action Go_To_S2 of Fig.4; and the trigger action Go_To_Backup of Fig.5 corresponds to the trigger action Go_To_S1 of Fig.4, as shown in following Table 6.

**Table 6 Mapping Relationship between ATS Trigger Actions in Figs.4 and 5**

| Fig.5 | Fig.4 |
|---|---|
| Go_ To_Normal | Go_To_S2 |
| Go_To_Backup | Go_To_S1 |

The ATS is controlled to performing the corresponding trigger action after the connection positions of the Normal Primary line and the Back-up source in the ATS are judged by Fig.4 and the action to be triggered is judged by Fig.5.

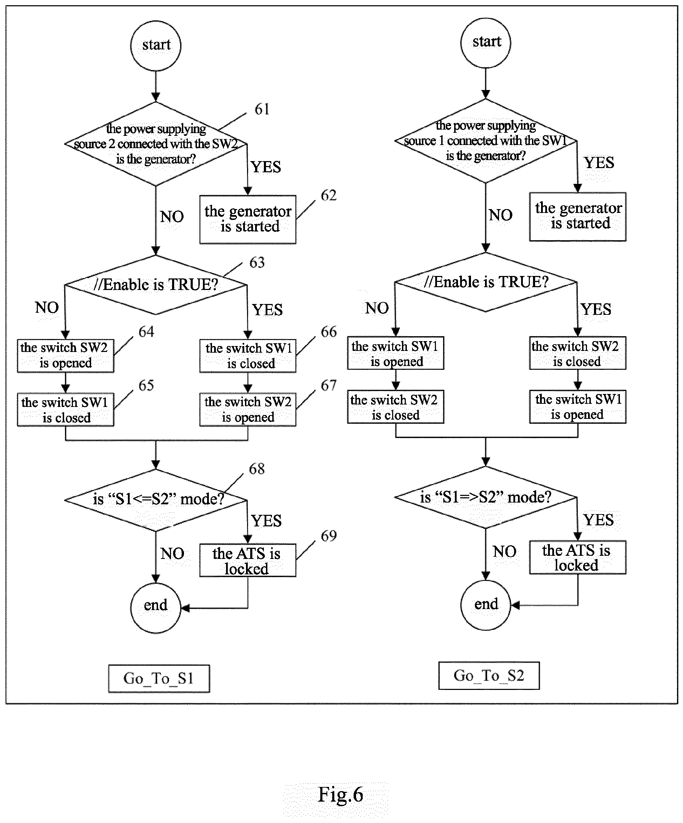

Fig.6 illustrates performing processes of the two actions of Go_To_S1 and Go_To_S2 of the ATS according to the present disclosure.

Referring to Fig.6, the performing processes of the two actions of Go_To_S1 and Go_To_S2 correspond to each other one-to-one, therefore only the performing process of the Go_To_S1 action would be described, and the performing process of the Go_To_S2 action would not be repeated and be omitted.

Referring to the left side of Fig.6, at a step 61, whether the power supplying source 2 connected with the SW2 is the generator is judged, and if the judgment result in the step 61 is YES, it proceeds to a step 62 at which the generator is started, and then it goes to a step 63. Otherwise, if the judgment result in the step 61 is NO, it goes to the step 63 directly.

At the step 63, it is judged whether the parallel coupling enable signal //Enable is TRUE (1), wherein the parallel coupling enable signal //Enable would be TRUE only if the configuration of the ATS allows the parallel coupling, the phase synchronization checking for the power supplying source 1 and the power supplying source 2 is OK and the voltages of both the power supplying source 1 and the power supplying source 2 are normal. When it is judged that the parallel coupling enable signal //Enable is not TRUE in the step 63, it proceeds to steps 64, 65 in turn so as to open the switch SW2 and close the switch SW1 in order, then it proceeds to a step 68.

When it is judged that the parallel coupling enable signal //Enable is TRUE in the step 63, it proceeds to steps 66, 67 in turn so as to close the switch SW1 and open the switch SW2 in order, then it proceeds to a step 68.

At the step 68, it is judged whether the mode of the ATS is the No-Return "S1<=S2" mode, and if the judgment result of the step 68 is YES, it goes to a step 69 to lock the ATS. If the judgment result of the step 68 is NO, the performing process of the Go_To_S1 action is terminated.

The performing processes of the two actions of Go_To_S1 and Go_To_S2 of the ATS according to the present disclosure illustrated in Fig.6 may be implemented with a hardware circuit of a software logic.

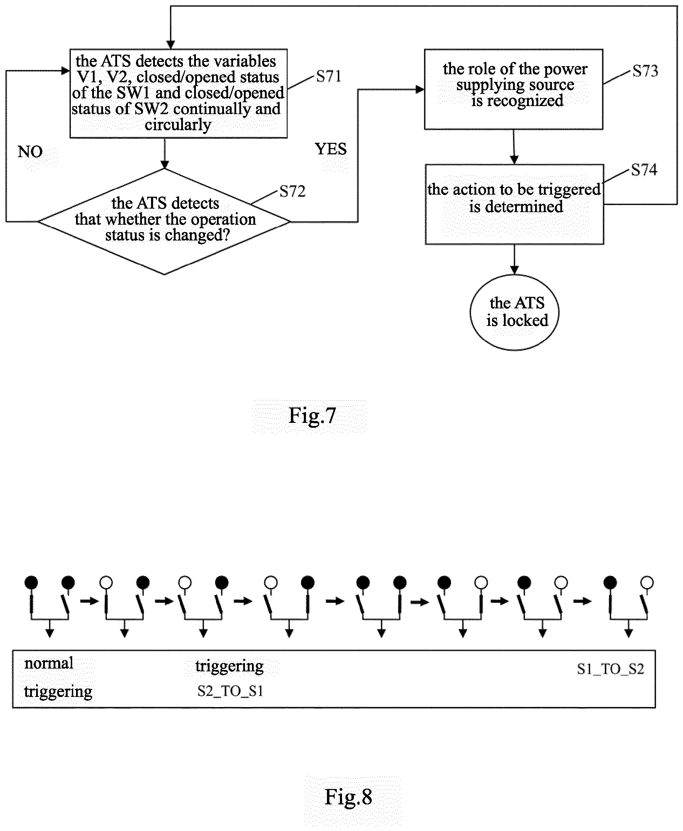

Fig.7 illustrates an overall operation flow of the ATS according to the present disclosure.

As illustrated in Fig.7, at a step 71, the ATS detects the variables V1, V2, the closed/opened status of the SW1 and the closed/opened status of the SW2 continually and circularly during an operation of the ATS.

At a step 72, the ATS detects whether its operation status is changed, and it proceeds to a step 73 when it is detected that the operation status is changed, while it returns to the step 71 when it is not detected that the operation status is changed.

At the step 73, the roles of the power supplying sources are recognized according to the manner shown in Fig.4, that is to say, it is judged which power supplying source of the ATS is the Normal Primary line and which power supplying source is the Back-up source. Next, it proceeds to a step 74.

At the step 74, the trigger action is judged according to the manner shown in Fig.5, in order to determine the action to be triggered. The Go_To_S1 action or the Go_To_S2 action is performed according to Fig.6. After the Go_To_S1 action or the Go_To_S2 action is finished, it returns to the step 71. Wherein the ATS would be locked and it would not return the step 71 if the ATS is in the "No-Return" mode during the performing of the Go_To_S1 action or the Go_To_S2 action.

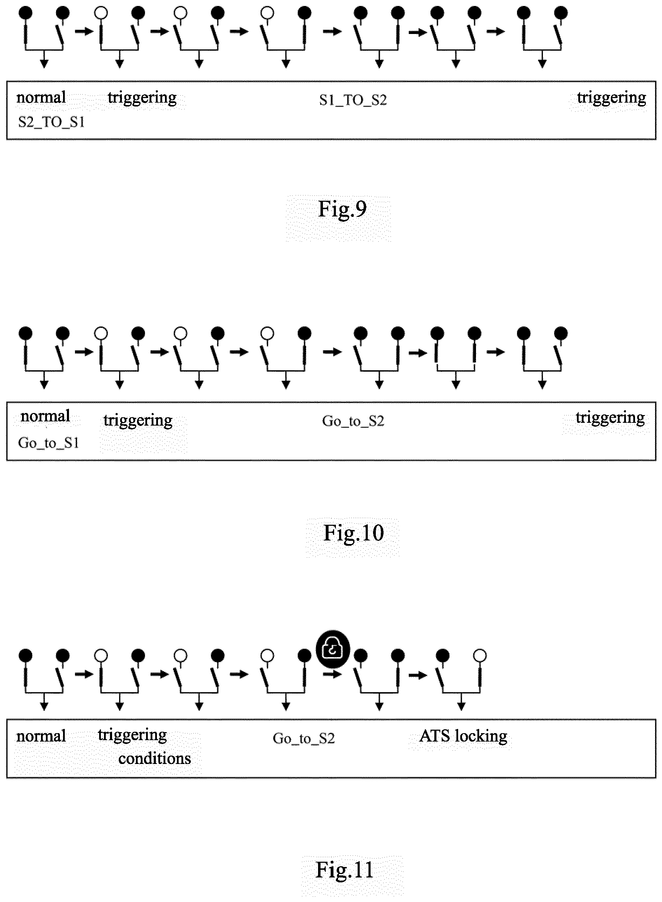

Figs.8-11 illustrate examples of switch action processes of the ATS according to the present disclosure. Wherein, Fig.8 illustrates a switch action process of an Auto-Return mode S1<=>S2 of the ATS according to the present disclosure; Fig.9 illustrates a switch action process of a Self-Return mode S1 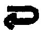 S2 of the ATS according to the present disclosure, in which a parallel coupling is not allowed; Fig.10 illustrates a switch action process of a Self-Return mode S1 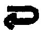 S2 of the ATS according to the present disclosure, in which a parallel coupling is allowed; and Fig.11 illustrates a switch action process of a No-Return mode S1=>S2 of the ATS according to the present disclosure

The embodiment of the disclosure being thus described, the scope of the invention being defined by the appended claims.

## Claims

1. A multi-type and multi-mode Automatic Transfer Switching, ATS, apparatus comprising a first switch (SW1) and a second switch (SW2) which are connected with a first power supplying source and a second power supplying source, respectively and supplying power to a load via the first switch and the second switch,
**characterized in that**
the ATS apparatus receives one of a first to a fifth indication signals (Sig1, Sig2, Sig3, Sig4, Sig5) for operation modes of the ATS, the first to the fifth indication signals are used to indicate a first to a fifth operation modes (S1=>S2, S1 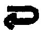 S2, S1<=>S2, S1<=S2, S1 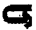 S2), respectively, wherein the first operation mode (S1=>S2) is a first No-Return mode ; the second operation mode (S1 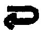 S2) is a first Self-Return mode; the third operation mode (S1<=>S2) is a Auto-Return mode; the fourth operation mode (S1<=S2) is a second No-Return mode; and the fifth operation mode (S1 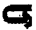 S2) is a second Self-Return mode, in the Auto-Return Mode, no definitions are required to be predefined regarding which power supplying source to which the switch is connected is a Normal Primary line and which power supplying source to which the switch is connected is a Back-up source, once the power supplying source which is supplying power fails, the ATS apparatus switches to another power supplying source which can supply power to the load continually, the another power supplying source is switched back to the previous power supplying source only if the another power supplying source fails and the previous power supplying source has recovered from the fault,
in the No-Return Mode, it is required to predefine which power supplying source is the Normal Primary line and which power supplying source is the Back-up source, the switching from the Normal Primary line to the Back-up source occurs if the Normal Primary line fails, but a reverse switching form the Back-up source to the Normal Primary line does not occur,
in the first No-Return Mode, the first power supplying source is the Normal Primary line and the second power supplying source is the Back-up source, in the second No-Return Mode, the second power supplying source is the Normal Primary line and the first power supplying source is the Back-up source,
in the Self-Return Mode, it is required to predefine which power supplying source is the Normal Primary line and which power supplying source is the Back-up source, the ATS apparatus switches to the Back-up source once the Normal Primary line fails, and switches back to the Normal Primary line as soon as the Normal Primary line recovers regardless of the state of the Back-up source,
in the first Self-Return Mode, the first power supplying source is the Normal Primary line and the second power supplying source is the Back-up source, in the Second Self-Return Mode, the second power supplying source is the Normal Primary line and the first power supplying source is the Back-up source,
the ATS apparatus further comprises:
a role judging device, configured to judge which power supplying source of the first power supplying source and the second power supplying source in the ATS is the Normal Primary line and which power supplying source is the Back-up source according to the received one among the first to fifth indication signals (Sig1, Sig2, Sig3, Sig4, Sig5), and further determine whether a connection of the ATS is a first corresponding relationship or a second corresponding relationship according to the determination for the Normal Primary line and the Back-up source, wherein **in the first corresponding relationship,** the first power supplying source is the Normal Primary line, the second power supplying source is the Back-up source, a voltage (Vp) of the Normal Primary line is equal to a voltage (V1) of the first power supplying source, a voltage (Vb) of the Back-up source is equal to a voltage (V2) of the second power supplying source, a Normal Primary line switch (SWp) connected with the Normal Primary line is the first switch (SW1) and a Back-up switch (SWb) connected with the Back-up source is the second switch (SW2); **in the second corresponding relationship,** the second power supplying source is the Normal Primary line, the first power supplying source is the Back-up source, the voltage (Vp) of the Normal Primary line is equal to the voltage of the second power supplying source (V2), the voltage (Vb) of the Back-up source is equal to the voltage (V1) of the first power supplying source, the Normal Primary line switch (SWp) connected with the Normal Primary line is the second switch (SW2) and the Back-up switch (SWb) connected with the Back-up source is the first switch (SW1); wherein the role judging device judges which power supplying source of the first power supplying source and the second power supplying source in the ATS is the Normal Primary line and which power supplying source is the Back-up source by a role judger (40) included therein according to the received third indication signal, when the third indication signal is received;
a trigger action acquiring device, configured to determine whether a trigger action of the ATS apparatus is a trigger action (Go_To_Normal) for transferring to the Normal Primary line or a trigger action (Go_To_Backup) for transferring to the Back-up source using a voltage variable (Vp) of the Normal Primary line representing a voltage status of the Normal Primary line, a voltage variable (Vb) of the Back-up source representing a voltage status of the Back-up source, a switch variable (SWp) of the Normal Primary line representing a switch status connected with the Normal Primary line and a switch variable (SWb) of the Back-up source representing a switch status connected with the Back-up source, from the views of the Normal Primary line and the Back-up source; wherein in the first corresponding relationship of the role judging device, the trigger action (Go_To_Normal) for transferring to the Normal Primary line is a trigger action (Go_To_S1) for transferring to the first power supplying source and the trigger action (Go_To_Backup) for transferring to the Back-up source is a trigger action (Go_To_S2) for transferring to the second power supplying source; and in the second corresponding relationship of the role judging device, the trigger action (Go_To_Normal) for transferring to the Normal Primary line is the trigger action (Go_To_S2) for transferring to the second power supplying source and the trigger action (Go_To_Backup) for transferring to the Back-up source is the trigger action (Go_To_S1) for transferring to the first power supplying source; and
a trigger action performing device, configured to perform the corresponding trigger action according to the corresponding relationship determined by the role judging device and the trigger action determined by the trigger action acquiring device,
wherein the role judger (40) comprises a three-input AND logic and a four-input AND logic,
wherein the third indication signal (Sig3), the voltage signal (V1) of the first power supplying source and a signal (SW1) of the first switch are inputted into a three-input AND gate (41), while the third indication signal (Sig3), the voltage (V2) of the second power supplying source, a signal (SW2) of the second switch and an inverted output signal from the first AND gate (41) are inputted into a four-input AND gate (42).

2. The ATS apparatus of claim 1, wherein a generator is connected with the first power supplying source or connected with the second power supplying source.

3. The ATS apparatus of claim 1, wherein
the role judger (40) is implemented with a hardware logic or a software logic.

4. The ATS apparatus of claim 1, wherein
the trigger action acquiring device is implemented with a hardware logic or a software logic.

5. The ATS apparatus of claim 1, wherein the trigger action acquiring device comprises a first AND gate (51), a second AND gate (52), a third AND gate (53), a fourth AND gate (54), a first OR gate (55), a NOT gate (56), a second OR gate (57) and a third OR gate (58);
wherein when the voltage of the Back-up source is inactive, the voltage variable (Vb) of the Back-up source, whose value is 0 originally, becomes 1 through the NOT gate (56), outputs a digital signal of 1 after passing through the second OR gate (57), and in turn triggers the trigger action (Go_To_Normal) for transferring to the Normal Primary line;
when the voltage of the Back-up source is active but the voltage of the Normal Primary line is inactive, the voltage variable (Vb) of the Back-up source whose value is 1 and an inverted signal of the voltage variable (Vp) of the Normal Primary line whose value is 0 are input to the second AND gate (52), the output of the second AND gate (52) become 1;after the output of the second AND gate (52) passing through the third OR gate (58), a digital signal of 1 is output and in turn trigger the trigger action (Go_To_Backup) for transferring to the Back-up source;
when the voltage of the Back-up source is active and the voltage of the Normal Primary line is also active, the voltage variable (Vb) of the Back-up source whose value is 1 and the voltage variable (Vp) of the Normal Primary line whose value is 1 are input to the first AND gate (51), the first AND gate (51) outputs a signal whose value is 1 to the third AND gate (53) and the fourth AND gate (54), which delivers an information indicating that the voltages of both the Back-up source and the Normal Primary line are active; wherein if after the switch variable (SWp) of the Normal Primary line and an inverted signal of the switch variable (SWb) of the Back-up source passing through the first OR gate (55), a signal whose value is 1 is obtained, it is represented that the switch connected with the Back-up source is closed, and at this time, the third AND gate (53) outputs a digital signal of 1, and after the output signal of 1 from the third AND gate (53) passing through the second OR gate (57), a digital signal of 1 is output and in turn triggers the trigger action (Go_To_Normal) for transferring to the Normal Primary line; if after an inverted signal of the switch variable (SWp) of the Normal Primary line and the switch variable (SWb) of the Back-up source passing through the fourth AND gate (54), a signal whose value is 1 is obtained, it is represented that the switch connected with the Normal Primary line is closed, and at this time, the fourth AND gate (54) outputs a digital signal of 1, and after the output signal of 1 from the fourth AND gate (54) passing through the third OR gate (58), a digital signal of 1 is output and in turn triggers the trigger action (Go_To_Backup) for transferring to the Back-up source.

6. The ATS apparatus of claim 1, wherein
the ATS is locked after the trigger action is performed if the ATS is in the first operation mode or the fourth operation mode.

7. The ATS apparatus of claim 1, wherein
if a configuration of the ATS allows a parallel coupling, and the voltages of the first power supplying source, the second power supplying source are normal while a phase synchronization checking for the first power supplying source and the second power supplying source is OK, the first switch and the second switch are turned on simultaneously so as to supply power to the load before the transferring between the switches of the ATS, and then the transferring between the switches of the ATS is performed.

8. A method for the multi-type and multi-mode Automatic Transfer Switching, ATS, apparatus of claim 1, **characterized by** comprising the steps of:
identifying, by a role judging device, roles of a first power supplying source and a second power supplying source, namely, judging which power supplying source of the ATS is a Normal Primary line and which power supplying source is a Back-up source;
judging, by a trigger action acquiring device, a trigger action so as to determine an action to be triggered; and
performing, by a trigger action performing device, a corresponding trigger action according to a corresponding relationship determined by the role judging device and the trigger action determined by the trigger action acquiring device.

9. The method of claim 8, wherein a generator is connected with the first power supplying source or connected with the second supplying source.

10. The method of claim 8, wherein
the ATS is locked after the trigger action is performed if the ATS is in the first operation mode or the fourth operation mode.

11. The method of claim 8, wherein
if a configuration of the ATS allows a voltage paralleling, and the voltages of the first power supplying source, the second power supplying source are normal while a phase synchronization checking for the first power supplying source and the second power supplying source is OK, the first switch and the second switch are turned on simultaneously so as to supply power to the load before the transferring between the switches of the ATS, and then the transferring between the switches of the ATS is performed.

## Patentansprüche

1. Mutifunktionale und multimodale automatische Weiterleitungsumschaltvorrichtung, ATS-Vorrichtung, die einen ersten Schalter (SW1) und einen zweiten Schalter (SW2) umfasst, welche mit einer ersten Stromversorgungsquelle bzw. einer zweiten Stromversorgungsquelle verbunden sind und über den ersten Schalter und den zweiten Schalter Strom an eine Last liefern,
**dadurch gekennzeichnet, dass**
die ATS-Vorrichtung eines von einem ersten bis zu einem fünften Anzeigesignal (Sig1, Sig2, Sig3, Sig4, Sig5) für Betriebsmodi der ATS empfängt, wobei das erste bis fünfte Anzeigesignal verwendet werden, um jeweils einen ersten bis zu einem fünften Betriebsmodus (S1 => S2, S1 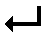 S2, S1 <=> S2, S1 <= S2, S1 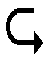 S2) anzuzeigen, wobei der erste Betriebsmodus (S1 => S2) ein erster Modus ohne Rückkehr ist; der zweite Betriebsmodus (S1 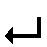 S2) ein erster Modus mit Selbstrückkehr ist; der dritte Betriebsmodus (S1 <=> S2) ein Modus mit automatischer Rückkehr ist; der vierte Betriebsmodus (S1 <= S2) ein zweiter Modus ohne Rückkehr ist; und der fünfte Betriebsmodus (S1 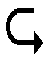 S2) ein zweiter Modus mit Selbstrückkehr ist,
wobei es in dem Modus mit automatischer Rückkehr nicht erforderlich ist, dass Definitionen hinsichtlich dessen vordefiniert werden, welche Stromversorgungsquelle, mit welcher der Schalter verbunden ist, eine normale primäre Leitung ist, und welche Stromversorgungsquelle, mit welcher der Schalter verbunden ist, eine Reservequelle ist, wobei die ATS-Vorrichtung, sobald die Stromversorgungsquelle, welche gerade Strom liefert, ausfällt, zu einer anderen Stromversorgungsquelle umschaltet, welche der Last kontinuierlich Strom zuführen kann, von der anderen Stromversorgungsquelle auf die vorherige Stromversorgungsquelle nur zurückgeschaltet wird, wenn die andere Stromversorgungsquelle ausfällt und sich die vorherige Stromversorgungsquelle von dem Ausfall erholt hat,
wobei es in dem Modus ohne Rückkehr erforderlich ist, vorab zu definieren, welche Stromversorgungsquelle die normale primäre Leitung ist und welche Stromversorgungsquelle die Reservequelle ist, das Umschalten von der normalen primären Leitung zu der Reservequelle stattfindet, wenn die normale primäre Leitung ausfällt, aber kein Zurückschalten von der Reservequelle zu der normalen primären Leitung stattfindet,
in dem ersten Modus ohne Rückkehr die erste Stromversorgungsquelle die normale primäre Leitung ist und die zweite Stromversorgungsquelle die Reservequelle ist, in dem zweiten Modus ohne Rückkehr die zweite Stromversorgungsquelle die normale primäre Leitung ist und die erste Stromversorgungsquelle die Reservequelle ist,
wobei es in dem Modus mit Selbstrückkehr erforderlich ist, vorab zu definieren, welche Stromversorgungsquelle die normale primäre Leitung ist und welche Stromversorgungsquelle die Reservequelle ist, die ATS-Vorrichtung auf die Reservequelle umschaltet, sobald die normale primäre Leitung ausfällt, und zu der normalen primären Leitung zurückschaltet, sobald sich die normale primäre Leitung erholt hat, ohne Rücksicht auf den Status der Reservequelle,
in dem ersten Modus mit Selbstrückkehr die erste Stromversorgungsquelle die normale primäre Leitung ist und die zweite Stromversorgungsquelle die Reservequelle ist, in dem zweiten Modus mit Selbstrückkehr die zweite Stromversorgungsquelle die normale primäre Leitung ist und die erste Stromversorgungsquelle die Reservequelle ist,
wobei die ATS-Vorrichtung ferner umfasst:
eine Rollenbeurteilungsvorrichtung, die ausgestaltet ist, um in Übereinstimmung mit dem einen empfangenen Anzeigesignal aus dem ersten bis fünften Anzeigesignal (Sig1, Sig2, Sig3, Sig4, Sig5) zu beurteilen, welche Stromversorgungsquelle von der ersten Stromversorgungsquelle und der zweiten Stromversorgungsquelle in der ATS die normale primäre Leitung ist und welche Stromversorgungsquelle die Reservequelle ist, und um ferner in Übereinstimmung mit der Feststellung der normalen primären Leitung und der Reservequelle festzustellen, ob eine Verbindung der ATS eine erste korrespondierende Beziehung oder eine zweite korrespondierende Beziehung ist, wobei **in der ersten korrespondierenden Beziehung** die erste Stromversorgungsquelle die normale primäre Leitung ist, die zweite Stromversorgungsquelle die Reservequelle ist, eine Spannung (Vp) der normalen primären Leitung gleich einer Spannung (V1) der ersten Stromversorgungsquelle ist, eine Spannung (Vb) der Reservequelle gleich einer Spannung (V2) der zweiten Stromversorgungsquelle ist, ein Schalter (SWp) der normalen primären Leitung, der mit der normalen primären Leitung verbunden ist, der erste Schalter (SW1) ist und ein Reserveschalter (SWb), der mit der Reservequelle verbunden ist, der zweite Schalter (SW2) ist; **in der zweiten korrespondierenden Beziehung** die zweite Stromversorgungsquelle die normale primäre Leitung ist, die erste Stromversorgungsquelle die Reservequelle ist, die Spannung (Vp) der normalen primären Leitung gleich der Spannung der zweiten Stromversorgungsquelle (V2) ist, die Spannung (Vb) der Reservequelle gleich der Spannung (V1) der ersten Stromversorgungsquelle ist, der Schalter (SWp) der normalen primären Leitung, der mit der normalen primären Leitung verbunden ist, der zweite Schalter (SW2) ist und der Reserveschalter (SWb), der mit der Reservequelle verbunden ist, der erste Schalter (SW1) ist; wobei die Rollenbeurteilungsvorrichtung durch einen Rollenbeurteiler (40), der darin enthalten ist, in Übereinstimmung mit dem empfangenen dritten Anzeigesignal beurteilt, welche Stromversorgungsquelle von der ersten Stromversorgungsquelle und der zweiten Stromversorgungsquelle in der ATS die normale primäre Leitung ist und welche Stromversorgungsquelle die Reservequelle ist, wenn das dritte Anzeigesignal empfangen wird;
eine Vorrichtung zum Beschaffen einer Auslöseaktion, die ausgestaltet ist, um unter Verwendung einer Spannungsvariable (Vp) der normalen primären Leitung, die einen Spannungsstatus der normalen primären Leitung repräsentiert, einer Spannungsvariable (Vb) der Reservequelle, die einen Spannungsstatus der Reservequelle repräsentiert, einer Schaltervariable (SWp) der normalen primären Leitung, die einen Status eines Schalters repräsentiert, der mit der normalen primären Leitung verbunden ist, und einer Schaltervariable (SWb) der Reservequelle, die einen Status eines Schalters repräsentiert, der mit der Reservequelle verbunden ist, aus der Sicht der normalen primären Leitung und der Reservequelle festzustellen, ob eine Auslöseaktion der ATS-Vorrichtung eine Auslöseaktion (Go_To_Normal) zum Weiterleiten auf die normale primäre Leitung oder eine Auslöseaktion (Go_To_Backup) zum Weiterleiten auf die Reservequelle ist; wobei in der ersten korrespondierenden Beziehung der Rollenbeurteilungsvorrichtung die Auslöseaktion (Go_To_Normal) zum Weiterleiten auf die normale primäre Leitung eine Auslöseaktion (Go_To_S1) zum Weiterleiten auf die erste Stromversorgungsquelle ist und die Auslöseaktion (Go_To_Backup) zum Weiterleiten auf die Reservequelle eine Auslöseaktion (Go_To_S2) zum Weiterleiten auf die zweite Stromversorgungsquelle ist; und in der zweiten korrespondierenden Beziehung der Rollenbeurteilungsvorrichtung die Auslöseaktion (Go_To_Normal) zum Weiterleiten auf die normale primäre Leitung die Auslöseaktion (Go_To_S2) zum Weiterleiten auf die zweite Stromversorgungsquelle ist und die Auslöseaktion (Go_To_Backup) zum Weiterleiten auf die Reservequelle die Auslöseaktion (Go_To_S1) zum Weiterleiten auf die erste Stromversorgungsquelle ist; und
eine Vorrichtung zum Ausführen einer Auslöseaktion, die ausgestaltet ist, um die korrespondierende Auslöseaktion in Übereinstimmung mit der korrespondierenden Beziehung, die durch die Rollenbeurteilungsvorrichtung festgestellt wurde, und mit der Auslöseaktion, die von der Vorrichtung zum Beschaffen einer Auslöseaktion festgestellt wurde, auszuführen,
wobei der Rollenbeurteiler (40) eine UND-Logik mit drei Eingängen und eine UND-Logik mit vier Eingängen umfasst,
wobei das dritte Anzeigesignal (Sig3), das Spannungssignal (V1) der ersten Stromversorgungsquelle und ein Signal (SW1) des ersten Schalters in ein UND-Gatter (41) mit drei Eingängen eingegeben werden, während das dritte Anzeigesignal (Sig3), die Spannung (V2) der zweiten Stromversorgungsquelle, ein Signal (SW2) des zweiten Schalters und ein invertiertes Ausgabesignal aus dem ersten UND-Gatter (41) in ein UND-Gatter (42) mit vier Eingängen eingegeben werden.

2. ATS-Vorrichtung nach Anspruch 1,
wobei ein Generator mit der ersten Stromversorgungsquelle oder mit der zweiten Stromversorgungsquelle verbunden ist.

3. ATS-Vorrichtung nach Anspruch 1,
wobei der Rollenbeurteiler (40) mit einer Hardwarelogik oder mit einer Softwarelogik implementiert ist.

4. ATS-Vorrichtung nach Anspruch 1,
wobei die Vorrichtung zum Beschaffen einer Auslöseaktion mit einer Hardwarelogik oder mit einer Softwarelogik implementiert ist.

5. ATS-Vorrichtung nach Anspruch 1,
wobei die Vorrichtung zum Beschaffen einer Auslöseaktion ein erstes UND-Gatter (51), ein zweites UND-Gatter (52), ein drittes UND-Gatter (53), ein viertes UND-Gatter (54), ein erstes ODER-Gatter (55), ein NICHT-Gatter (56), ein zweites ODER-Gatter (57) und ein drittes ODER-Gatter (58) umfasst;
wobei, wenn die Spannung der Reservequelle inaktiv ist, die Spannungsvariable (Vb) der Reservequelle, deren Wert ursprünglich 0 ist, durch das NICHT-Gatter (56) zu 1 wird, nach dem Durchlaufen des zweiten ODER-Gatters (57) ein digitales Signal von 1 ausgibt und wiederum die Auslöseaktion (Go_To_Normal) zum Weiterleiten auf die normale primäre Leitung auslöst;
wenn die Spannung der Reservequelle aktiv ist, aber die Spannung der normalen primären Leitung inaktiv ist, die Spannungsvariable (Vb) der Reservequelle, deren Wert 1 ist, und ein invertiertes Signal der Spannungsvariabe (Vp) der normalen primären Leitung, deren Wert 0 ist, in das zweite UND-Gatter (52) eingegeben werden, wodurch der Ausgang des zweiten UND-Gatters (52) 1 wird; nachdem die Ausgabe des zweiten UND-Gatters (52) durch das dritte ODER-Gatter (58) hindurchgelaufen ist, ein digitales Signal von 1 ausgegeben wird und wiederum die Auslöseaktion (Go_To_Backup) zum Weiterleiten auf die Reservequelle ausgelöst wird;
wenn die Spannung der Reservequelle aktiv ist und die Spannung der normalen primären Leitung ebenfalls aktiv ist, die Spannungsvariable (Vb) der Reservequelle, deren Wert 1 ist, und die Spannungsvariable (Vp) der normalen primären Leitung, deren Wert 1 ist, in das erste UND-Gatter (51) eingegeben werden, das erste UND-Gatter (51) ein Signal, dessen Wert 1 ist, an das dritte UND-Gatter (53) und an das vierte UND-Gatter (54) ausgibt, was eine Information liefert, die anzeigt, dass die Spannungen von sowohl der Reservequelle als auch der normalen primären Leitung aktiv sind; wobei, wenn, nachdem die Schaltervariable (SWp) der normalen primären Leitung und ein invertiertes Signal der Schaltervariable (SWb) der Reservequelle durch das erste ODER-Gatter (55) hindurchgelaufen sind, ein Signal erhalten wird, dessen Wert gleich 1 ist, was repräsentiert, dass der mit der Reservequelle verbundene Schalter geschlossen ist, und zu diesem Zeitpunkt das dritte UND-Gatter (53) ein digitales Signal von 1 ausgibt, und nachdem das Ausgabesignal von 1 aus dem dritten UND-Gatter (53) durch das zweite ODER-Gatter (57) hindurchgelaufen ist, ein digitales Signal von 1 ausgegeben wird und wiederum die Auslöseaktion (Go_To_Normal) zum Weiterleiten auf die normale primäre Leitung auslöst;
wenn, nachdem ein invertiertes Signal der Schaltervariable (SWp) der normalen primären Leitung und der Schaltervariable (SWb) der Reservequelle durch das vierte UND-Gatter (54) hindurchgelaufen sind, ein Signal erhalten wird, dessen Wert gleich 1 ist, was repräsentiert, dass der Schalter, der mit der normalen primären Leitung verbunden ist, geschlossen ist, und zu diesem Zeitpunkt das vierte UND-Gatter (54) ein digitales Signal von 1 ausgibt, und nachdem das Ausgabesignal von 1 aus dem vierten UND-Gatter (54) durch das dritte ODER-Gatter (58) hindurchgelaufen ist, ein digitales Signal von 1 ausgegeben wird und wiederum die Auslöseaktion (Go_To_Backup) zum Weiterleiten auf die Reservequelle auslöst.

6. ATS-Vorrichtung nach Anspruch 1,
wobei die ATS verriegelt wird, nachdem die Auslöseaktion ausgeführt wurde, wenn sich die ATS in dem ersten Betriebsmodus oder in dem vierten Betriebsmodus befindet.

7. ATS-Vorrichtung nach Anspruch 1,
wobei, wenn eine Konfiguration der ATS eine parallele Kopplung zulässt, und die Spannungen der ersten Stromversorgungsquelle und der zweiten Stromversorgungsquelle normal sind, während eine Phasensynchronisationsprüfung für die erste Stromversorgungsquelle und die zweite Stromversorgungsquelle OK ist, der erste Schalter und der zweite Schalter vor dem Weiterleiten zwischen den Schaltern der ATS gleichzeitig eingeschaltet werden, um Strom an die Last zu liefern, und dann das Weiterleiten zwischen den Schaltern der ATS ausgeführt wird.

8. Verfahren für die multifunktionale und multimodale automatische Weiterleitungsumschaltvorrichtung, ATS-Vorrichtung, nach Anspruch 1,
**dadurch gekennzeichnet, dass** es die Schritte umfasst, dass:
von einer Rollenbeurteilungsvorrichtung Rollen einer ersten Stromversorgungsquelle und einer zweiten Stromversorgungsquelle identifiziert werden, nämlich beurteilt wird, welche Stromversorgungsquelle der ATS eine normale primäre Leitung ist und welche Stromversorgungsquelle eine Reservequelle ist;
von einer Vorrichtung zum Beschaffen einer Auslöseaktion eine Auslöseaktion beurteilt wird, um eine auszulösende Aktion zu bestimmen; und
von einer Vorrichtung zum Ausführen einer Auslöseaktion eine korrespondierende Auslöseaktion in Übereinstimmung mit einer korrespondierenden Beziehung, die von der Rollenbeurteilungsvorrichtung bestimmt wird, und mit der Auslöseaktion, die von der Vorrichtung zum Beschaffen einer Auslöseaktion bestimmt wird, ausgeführt wird.

9. Verfahren nach Anspruch 8,
wobei ein Generator mit der ersten Stromversorgungsquelle oder mit der zweiten Stromversorgungsquelle verbunden wird.

10. Verfahren nach Anspruch 8,
wobei die ATS verriegelt wird, nachdem die Auslöseaktion ausgeführt wurde, wenn sich die ATS in dem ersten Betriebsmodus oder in dem vierten Betriebsmodus befindet.

11. Verfahren nach Anspruch 8,
wobei, wenn eine Konfiguration der ATS eine Spannungsparallelisierung zulässt, und wenn die Spannungen der ersten Stromversorgungsquelle und der zweiten Stromversorgungsquelle normal sind, während eine Phasensynchronisationsprüfung für die erste Stromversorgungsquelle und die Stromversorgungsquelle OK ist, vor dem Weiterleiten zwischen den Schaltern der ATS der erste Schalter und der zweite Schalter gleichzeitig eingeschaltet werden, um Strom an die Last zu liefern, und dann das Weiterleiten zwischen den Schaltern der ATS ausgeführt wird.

## Revendications

1. Appareil de commutation de transfert automatique (ATS) multi-type et multi-mode comprenant un premier commutateur (SW1) et un second commutateur (SW2) qui sont connectés à une première source d'alimentation de puissance et à une seconde source d'alimentation de puissance, respectivement et qui alimente une puissance à une charge via le premier commutateur et le second commutateur,
**caractérisé en ce que**
l'appareil ATS reçoit un signal parmi un premier à un cinquième signaux d'indication (Sig1, Sig2, Sig3, Sig4, Sig5) pour des modes de fonctionnement du ATS, le premier au cinquième signaux d'indication sont utilisés pour indiquer un premier à un cinquième mode de fonctionnement (S1 => S2, S1 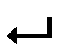 S2, S1 <=> S2, S1 <= S2, S1 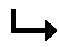 S2) respectivement, dans lequel
le premier mode de fonctionnement (S1 => S2) est un premier mode de non-retour ;
le second mode de fonctionnement (S1 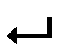 S2) est un premier mode à auto retour,
le troisième mode de fonctionnement (S1 <=> S2) est un mode à auto retour,
le quatrième mode de fonctionnement (S1 <= S2) est un second mode de non-retour ; et
le cinquième mode de fonctionnement (S1 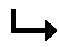 S2) est un second mode à auto retour,
dans le mode à auto retour, il n'est pas nécessaire de prédéfinir aucune définition pour savoir laquelle des sources d'alimentation de puissance à laquelle le commutateur est connecté est une ligne primaire normale, et laquelle des sources d'alimentation de puissance à laquelle le commutateur est connecté est une source de secours, une fois que la source d'alimentation de puissance qui est en cours d'alimentation de puissance fait défaillance, l'appareil ATS commute vers une autre source d'alimentation de puissance qui est capable d'alimenter continuellement une puissance à la charge, l'autre source d'alimentation de puissance est commutée en retour vers la précédente source d'alimentation de puissance uniquement si l'autre source d'alimentation de puissance fait défaillance et que la précédente source d'alimentation de puissance a récupéré depuis la défaillance,
dans le mode de non-retour, il est exigé de prédéfinir laquelle des sources d'alimentation de puissance est la ligne normale primaire et laquelle des sources d'alimentation de puissance est la source de secours, la commutation depuis la ligne normale primaire vers la source de secours se produit si la ligne normale primaire fait défaillance, mais il ne se produit pas de commutation inverse depuis la source de secours vers la ligne normale primaire,
dans le premier mode de non-retour, la première source d'alimentation de puissance est la ligne normale primaire et la seconde source d'alimentation de puissance est la source de secours,
dans le second mode de non-retour, la seconde source d'alimentation de puissance est la ligne normale primaire et la première source d'alimentation de puissance est la source de secours,
dans le mode d'auto retour, il est exigé de prédéfinir laquelle des sources d'alimentation de puissance est la ligne normale primaire et laquelle des sources d'alimentation de puissance est la source de secours, l'appareil ATS commute vers la source de secours une fois que la ligne normale primaire fait défaillance, et commute en retour vers la ligne normale primaire dès que la ligne normale primaire a récupéré indépendamment de l'état de la source de secours,
dans le premier mode d'auto retour, la première source d'alimentation de puissance est la ligne normale primaire et la seconde source d'alimentation de puissance est la source de secours,
dans le second mode d'auto retour, la seconde source d'alimentation de puissance est la ligne normale primaire et la première source d'alimentation de puissance est la source de secours,
l'appareil ATS comprend en outre :
un dispositif de jugement de rôle, configuré pour juger laquelle des sources d'alimentation de puissance parmi la première source d'alimentation de puissance et la seconde source d'alimentation de puissance dans le ATS est la ligne primaire normale et laquelle des sources d'alimentation de puissance est la source de secours en accord avec le signal reçu parmi le premier au cinquième signaux d'indication (Sig1, Sig2, Sig3, Sig4, Sig5), et détermine en outre si une connexion du ATS est une première relation correspondante ou une seconde relation correspondante en accord avec la détermination pour la ligne normale primaire et la source de secours, dans lequel, dans la première relation correspondante, la première source d'alimentation de puissance est la ligne normale primaire, la seconde source d'alimentation de puissance est la source de secours, un voltage (Vp) de la ligne normale primaire est égal à un voltage (V1) de la première source d'alimentation de puissance, un voltage (Vb) de la source de secours est égal à un voltage (V2) de la seconde source d'alimentation de puissance, un commutateur de ligne normale primaire (SWp) connecté à la ligne normale primaire est le premier commutateur (SW1) et un commutateur de secours (SWb) connecté à la source de secours est le second commutateur (SW2) ; dans la seconde relation correspondante, la seconde source d'alimentation de puissance est la ligne normale primaire, la première source d'alimentation de puissance est la source de secours, le voltage (Vp) de la ligne normale primaire est égal au voltage de la seconde source d'alimentation de puissance (V2), le voltage (Vb) de la source de secours est égal au voltage (V1) de la première source d'alimentation de puissance, le commutateur de ligne normale primaire (SWp) connecté à la ligne normale primaire est le second commutateur (SW2) et le commutateur de secours (SWb) connecté à la source de secours est le premier commutateur (SW1) ; dans lequel le dispositif de jugement de rôle juge quant à savoir laquelle des sources d'alimentation de puissance parmi la première source d'alimentation de puissance et la seconde source d'alimentation de puissance dans le ATS est la ligne normale primaire et laquelle des sources d'alimentation de puissance est la source de secours par un dispositif de jugement de rôle (40) inclus dans celui-ci en accord avec le troisième signal d'indication reçu, lorsque le troisième signal d'indication est reçu ;
un dispositif d'acquisition d'action de déclenchement, configuré pour déterminer si une action de déclenchement de l'appareil ATS est une action de déclenchement (go_to_normal) pour transférer vers la ligne normale primaire ou une action de déclenchement (go_to_backup) pour transférer vers la source de secours en utilisant une variable de voltage (Vp) de la ligne normale primaire représentant un état du voltage de la ligne normale primaire, et une variable de voltage (Vb) de la source de secours représentant un état du voltage de la source de secours, et une variable de commutation (SWp) de la ligne normale primaire représentant un état du commutateur connecté à la ligne de normale primaire et une variable de commutation (SWb) de la source de secours représentant un état du commutateur connecté à la source de secours, depuis les vues de la ligne normale primaire et de la source de secours ; dans lequel, dans la première relation correspondante du dispositif de jugement de rôle, l'action de déclenchement (go_to_normal) pour transférer vers la ligne normale primaire est une action de déclenchement (go_to_S1) pour transférer vers la première source d'alimentation de puissance et l'action de déclenchement (go_to_backup) pour transférer vers la source de secours est une action de déclenchement (go_to_S2) pour transférer vers la seconde source d'alimentation de puissance ; et, dans la seconde relation correspondante du dispositif de jugement de rôle, l'action de déclenchement (go_to_normal) pour transférer vers la ligne normale primaire est l'action de déclenchement (go_to_S2) pour transférer vers la seconde source d'alimentation de puissance et l'action de déclenchement (go_to_backup) pour transférer vers la source de secours est l'action de déclenchement (go_to_S1) pour transférer vers la première source d'alimentation de puissance ; et
un dispositif d'exécution d'action de déclenchement, configuré pour exécuter l'action de déclenchement correspondant en accord avec la relation correspondante déterminée par le dispositif de jugement de rôle et
l'action de déclenchement déterminée par le dispositif d'acquisition d'action de déclenchement,
dans lequel le dispositif de jugement de rôle (40) comprend un circuit logique ET à trois entrées et un circuit logique ET à quatre entrées,
dans lequel le troisième signal d'indication (Sig3), le signal de voltage (V1) de la première source d'alimentation de puissance et un signal (SW1) du premier commutateur sont injectés dans une porte ET à trois entrées (41), alors que le troisième signal d'indication (Sig3), le voltage (V2) de la seconde source d'alimentation de puissance, un signal (SW2) du second commutateur et un signal de sortie inversée provenant de la première porte ET (41) sont injectés dans une porte ET à quatre entrées (42).

2. Appareil ATS selon la revendication 1, dans lequel un générateur est connecté à la première source d'alimentation de puissance ou est connecté à la seconde source d'alimentation de puissance.

3. Appareil ATS selon la revendication 1, dans lequel le dispositif de jugement de rôle (40) est mis en oeuvre avec un élément logique matériel ou un élément logique logiciel.

4. Appareil ATS selon la revendication 1, dans lequel le dispositif d'acquisition d'action de déclenchement est mis en oeuvre avec un élément logique matériel ou un élément logique logiciel.

5. Appareil ATS selon la revendication 1, dans lequel le dispositif d'acquisition d'action de déclenchement comprend une première porte ET (51), une seconde porte ET (52), une troisième porte ET (53), une quatrième porte ET (54), une première porte OU (55) une porte NON (56), une seconde porte OU (57), et une troisième porte OU (58) ;
dans lequel quand le voltage de la source de secours est inactif, la variable de voltage (Vb) de la source de secours, dont la valeur est à l'origine 0, devient 1 via la porte NON (56), et délivre un signal numérique 1 après être passé à travers la seconde porte OU (57), et déclenche à son tour l'action de déclenchement (go_to_normal) pour transférer vers la ligne normale primaire ;
quand le voltage de la source de secours est actif mais le voltage de la ligne normale primaire est inactif, la variable de voltage (Vb) de la source de secours dont la valeur est 1 et un signal inversé de la variable de voltage (Vp) de la ligne normale primaire dont la valeur est 0 sont injectés dans la seconde porte ET (52), la sortie de la seconde porte ET (52) devient 1 ; après que la sortie de la seconde porte ET (52) soit passée à travers la troisième porte OU (58), signal numérique 1 est délivré et déclenche à son tour l'action de déclenchement (go_to_backup) pour transférer vers la source de secours ;
quand le voltage de la source de secours est actif et le voltage de la ligne normale primaire est également actif, la variable de voltage (Vb) de la source de secours dont la valeur est 1 et la variable de voltage (Vp) de la ligne normale primaire dont la valeur est 1 sont injectées dans la première porte ET (51), la première porte ET (51) délivre un signal dont la valeur est 1 à la troisième porte ET (53) et à la quatrième porte ET (54), qui fournit une information indiquant que les voltages à la fois de la source de secours et de la ligne normale primaire sont actifs ; dans lequel si après que la variable de commutation (SWp) de la ligne normale primaire et un signal inversé de la variable de commutateur (SWb) de la source de secours soient passés à travers la première porte OU (55), un signal dont la valeur est 1 est obtenu, ce qui représente que le commutateur connecté à la source de secours est fermé et, à ce moment, la troisième porte ET (53) délivre un signal numérique 1 et, après que le signal de sortie 1 provenant de la troisième porte ET (53) soit passé à travers la seconde porte OU (57), un signal numérique 1 est délivré et déclenche à son tour l'action de déclenchement (go_to_normal) pour transférer vers la ligne normale primaire ; si après qu'un signal inversé de la variable de signal (SWp) de la ligne normale primaire et la variable de commutation (SWb) de la source de secours soient passés à travers la quatrième porte ET (54), un signal dont la valeur est 1 est obtenu, et cela représente que le commutateur connecté à la ligne normale primaire est fermé et à ce moment, la quatrième porte ET (54) délivre un signal numérique 1 et, après que le signal de sortie 1 provenant de la quatrième porte ET (54) soit passé à travers la troisième porte OU (58), un signal numérique 1 est délivré et déclenche à son tour l'action de déclenchement (go_to_backup) pour transférer vers la source de secours.

6. Appareil ATS selon la revendication 1, dans lequel
l'appareil ATS est bloqué après que l'action de déclenchement a été exécutée si l'appareil ATS est dans le premier mode de fonctionnement ou dans le quatrième mode de fonctionnement.

7. Appareil ATS selon la revendication 1, dans lequel
si une configuration de l'appareil ATS permet un couplage parallèle et si les voltages de la première source d'alimentation de puissance et de la seconde source d'alimentation de puissance sont normales alors qu'une vérification de la synchronisation de phase pour la première source d'alimentation de puissance et la seconde source d'alimentation de puissance est bonne, le premier commutateur et le second commutateur sont mis simultanément en marche de manière à alimenter une puissance à la charge avant le transfert entre les commutateurs de l'appareil ATS, et ensuite le transfert entre les commutateurs de l'appareil ATS est exécuté.

8. Procédé pour l'appareil de commutation de transfert automatique (ATS) multi-type et multi-mode selon la revendication 1, **caractérisé en ce qu'**il comprend les étapes consistant à :
identifier, par un dispositif de jugement de rôle, les rôles d'une première source d'alimentation de puissance et d'une seconde source d'alimentation de puissance, à savoir, en jugeant laquelle des sources d'alimentation de puissance de l'appareil ATS est une ligne normale primaire et laquelle des sources d'alimentation de puissance est une source de secours ;
juger, par un dispositif d'acquisition d'action de déclenchement, une action de déclenchement de manière à déterminer une action à déclencher ; et
exécuter, par un dispositif d'exécution d'action de déclenchement, une action de déclenchement correspondante en accord avec une relation correspondante déterminée par le dispositif de jugement de rôle et l'action de déclenchement déterminée par le dispositif d'acquisition d'action de déclenchement.

9. Procédé selon la revendication 8, dans lequel un générateur est connecté à la première source d'alimentation de puissance ou est connecté à la seconde source d'alimentation de puissance.

10. Procédé selon la revendication 8, dans lequel
l'appareil ATS est bloqué après que l'action de déclenchement a été exécutée s'il appareil ATS est dans le premier mode de fonctionnement ou dans le quatrième mode de fonctionnement.

11. Procédé selon la revendication 8, dans lequel
si une configuration de l'appareil ATS permet une parallélisation des voltages, et si les voltages de la première source d'alimentation de puissance et de la seconde source d'alimentation de puissance sont normaux alors qu'une vérification de synchronisation de phase pour la première source d'alimentation de puissance et la seconde source d'alimentation de puissance est bonne, le premier commutateur et le second commutateur sont simultanément mis en service de façon à appliquer une puissance à la charge avant le transfert entre les commutateurs de l'appareil ATS, et ensuite, le transfert entre les commutateurs de l'appareil ATS est exécuté.
